# EUROPÄISCHE PATENTSCHRIFT

(11) **EP 3 505 597 B1**
(45) Veröffentlichungstag und Bekanntmachung des Hinweises auf die Patenterteilung: **31.08.2022**
(21) Anmeldenummer: 19152590.6
(22) Anmeldetag: 19.01.2015
(51) Int. Cl.: C09K 21/12, C08K 3/32, C08K 5/00, C08K 5/5313

(54) **HALOGENFREIE FESTE FLAMMSCHUTZMITTELMISCHUNG UND IHRE VERWENDUNG**
HALOGEN-FREE FIXED FLAME RETARDANT MIXTURE AND ITS USE
MÉLANGE D'AGENT IGNIFUGE SOLIDE SANS HALOGÈNE ET SON UTILISATION

(30) Priorität: 29.01.2014 DE 102014001222
(43) Veröffentlichungstag der Anmeldung: 03.07.2019
(62) Teilanmeldung aus: 15701669.2
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Jacobi, Carola

(56) Entgegenhaltungen:
- WO-A1-2013/083247
- DE-A1- 10 359 814
- DE-A1-102010 048 025
- DE-A1-102011 120 218

## Beschreibung

Flammschutzmittelmischungen verschiedenster Art werden zur flammhemmenden Ausrüstung von Polymeren eingesetzt. Dabei ist es erforderlich, dass bei den für die Polymerherstellung typischen Verfahren die hinzuzufügenden Komponenten, auch die Flammschutzmittel, eine gute Fließfähigkeit und Rieselfähigkeit aufweisen, um gleichmäßig im Polymer verteilt werden zu können, damit dessen Eigenschaften nicht negativ beeinflusst werden.

Die Fließfähigkeit wird beeinflusst durch Korneigenschaften wie z. B. Korngröße, Korngrößenverteilung, Oberflächenbeschaffenheit der Körner, Wassergehalt bzw. Feuchte und unterschiedliche Kornformen. Je nach Korngröße oder Häufigkeit der unterschiedlich großen Partikel rollen diese unterschiedlich leicht aufeinander ab. Runde Partikel mit gleichmäßiger Oberfläche sollten leichter fließen als solche mit unregelmäßiger Gestalt. Je nach chemischer Oberfläche, Feuchte oder elektrostatischen Eigenschaften unterscheiden sich die Fließeigenschaften.

Werden Pulver mit schlechten Fließeigenschaften verarbeitet, erfolgt oft eine unregelmäßige Dosierung und damit eine ungleichmäßige Zusammensetzung und Verteilung im Polymer, so dass daraus eine von Formteil zu Formteil unzureichende Flammschutzwirkung resultiert.

Nach dem Stand der Technik kann die Fließfähigkeit durch Beimengungen von Trennmitteln und Fremdkörpern erhöht werden. Klein beschreibt als Lösung dieser Aufgabe in Seifen-Öle-Fette-Wachse 94 (1968), 849 den Zusatz von Calciumstearat und Aerosil in Mengen von 5.000 bis 10.000 ppm. Die hier zur Verbesserung der Rieselfähigkeit vorgeschlagenen silicathaltigen Hilfsmittel sind äußerst feinteilig. Sie können eingeatmet werden und stehen im Verdacht Lungenkrankheiten auszulösen.

Die WO 2003/035736A1 beschreibt Melamincyanurataggregate, die durch Bindemittel zusammengehalten werden. Die Aufgabe dort besteht in der Verbesserung der Gleichverteilung der Aggregate durch eine Verbesserung der Rieselfähigkeit. Dieser Begriff wird auch als Fließfähigkeit von Schüttgütern (Pulver, Agglomerate, Granulate, etc.) bezeichnet. Hier werden mit Zusatz von 1.000 ppm bis 10 Gew.-% organischem Hilfsstoff die entsprechenden Partikel von spezieller Größe zu größeren Aggregaten verklebt und damit die Rieselfähigkeit erhöht. Diese organischen Hilfsstoffe sind typischerweise organische Verbindungen, beispielsweise Polymere oder Copolymere basierend auf Vinylpyrrolidon, Vinylacetat und Vinylcaprolactam, Epoxiden, Urethanen, Acrylaten, Estern, Amiden, Stearaten, Olefinen, Cellulosederivaten oder Mischungen davon. Die vorgenannten Aggregate können u. a. dadurch hergestellt werden, dass die Partikel zuvor in einer wässrigen Aufschlämmung dispergiert werden und ein wasserlösliches Hilfsmittel zugefügt wird.

Die EP-1522551A1 beschreibt phosphorhaltige Flammschutzmittelagglomerate geringer Schüttdichte, die Aggregate und/oder Primärteilchen aus Phosphinsäuresalzen und/oder Diphosphinsäuresalzen und/oder deren Polymere enthalten und mit Hilfe eines Hilfsmittels zusammenhaften. Diese Agglomerate sind durch Sprühgranulierung zugänglich.

Um die Flammschutzmittelagglomerate so homogen wie möglich in einem Polymer zu verteilen wird ein besonders gutes Fließverhalten des Schüttgutes angestrebt. Dies gelingt durch den Einsatz des vorgenannten Flammschutzmittelagglomerats mit niedriger Schüttdichte und trotzdem geringer Staubneigung. Geringe Staubneigung ist wichtig, denn durch Staubneigung kann die Dosierung bei der Einarbeitung in Polymere in Extrudern ungleichmäßig sein und sich dadurch eine inhomogene Verteilung des Flammschutzmittels im Polymer ergeben. Dies kann wiederum wegen daraus folgender lokaler Unterdosierung nachteilig für die Flammschutzwirkung sein.

Die EP-1522551A1 befasst sich nur mit der Erhöhung der Rieselfähigkeit bzw. Fließfähigkeit, aber nicht mit der Verbesserung der Gleichmäßigkeit der Rieselfähigkeit.

JP-2003138264A1 und JP-2003138265A1 beschreiben eine gute Fließfähigkeit für halogenhaltige Flammschutzmittel durch Verwendung besonders großer Partikel (0,8 bis 2 mm).

In der JP-2005171206A1 werden Flammschutzmittelmischungen mit guter Rieselfähigkeit durch Kombination von feinteiligen basischen Metalloxidpartikeln mit plättchenförmigen, feinteiligen, faserförmigen feinteiligen bzw. amorphen feinteiligen anorganischen Partikeln und anorganischen Flammschutzmitteln erhalten.

Die WO-2010075087A1 beschreibt eine frei fließende Flammschutzmittelzusammensetzung aus einem flüssigen phosphorhaltigen Flammschutzmittel in dem Letzteres auf einem Träger absorbiert wird.

Aus der DE 10 2010 048 025 A1 sind Flammschutzmittelmischungen bekannt, welche Komponenten A und B enthalten. Bei Komponente A handelt es sich um ausgewählte Dialkylphosphinsäuresalze und bei Komponente B handelt es sich um ausgewählte Salze der phosphorigen Säure. Aus diesem Dokument lässt sich nicht ableiten, dass bereits geringe Zusätze an ausgewählten Phosphaten zu einer gleichmäßigeren Rieselfähigkeit von Flammschutzmittelmischungen führt.

WO 2013/083247 A1 offenbart Flammschutzmittelmischungen enthaltend Flammschutzmittel und AI-Phosphite. Bei den Flammschutzmitteln kann es sich um Dialkylphosphinsäuren oder deren Salze handeln. Dieses Dokument erwähnt aber nicht die in der vorliegenden Erfindung eingesetzten Phosphate.

DE 10 2011 120 218 A1 offenbart ausgewählte Alkali-Aluminium-Mischphosphite. Die in diesem Dokument beschriebenen Flammschutzmittel können unter anderem Dialkylphosphinsäuren oder deren Salze enthalten. Auch in diesem Dokument werden an keiner Stelle die in der vorliegenden Erfindung eingesetzten Phosphate erwähnt.

Flammgeschützte Polymerformmassen werden u. a. beispielsweise hergestellt, in dem die Flammschutzkomponenten über den Seiteneinzug eines Doppelschnecken-Extruders bei Temperaturen von 250 bis 310 °C in eine Polymerschmelze eingearbeitet werden. Glasfasern werden - falls notwendig - über einen zweiten Seiteneinzug zugegeben. Der entstandene homogenisierte Polymerstrang wird abgezogen, im Wasserbad gekühlt und anschließend granuliert.

Bei ungleichmäßiger Rieselfähigkeit der Flammschutzkomponenten kann es zeitlich zu Überfüllungen von Befülltrichtern oder Unterdosierungen bei unzureichendem Produktnachschub aus den Vorratsbunkern kommen. Beides sind unerwünschte Produktionsstörungen. Als Folge davon können Chemikalien in die Betriebsumgebung austreten. Es kann auch zu schwankenden Produktzusammensetzungen in den flammgeschützten Polymerformmassen kommen. Bei einer Unterdosierung bedeutet dies einen unzureichenden Flammschutz für die Polymerformmasse.

Der vorliegenden Erfindung liegt daher die Aufgabe zugrunde, eine Flammschutzmittelmischung mit gleichmäßiger Rieselfähigkeit zur Verfügung zu stellen.

Eine weitere Aufgabe der vorliegenden Erfindung ist die Verhinderung von Prozessstörungen bei der Herstellung von flammgeschützten Polymerformmassen.

Die erfindungsgemäßen Flammschutzmittelmischungen enthalten keine Bindemittel, die zu einer Zusammenhaftung der Pulverpartikel zu höheren Aggregaten führen. Die Bindemittel würden lediglich die Effektivität der Flammschutzmittel verringern, indem die Menge an Aktivsubstanz (das ist das Flammschutzmittel) durch ggf. brennbare Hilfsmittel vermindert wird.

Es ist weiterhin Aufgabe der Erfindung, auf den Einsatz von wasserlöslichen organischen Hilfsmitteln zur Verbesserung der Rieselfähigkeit zu verzichten, ebenso soll die Korngröße der Flammschutzpartikel nicht vergrößert werden. Überraschenderweise wurde gefunden, dass die erfindungsgemäßen halogenfreie Flammschutzmittelmischungen eine gleichmäßige Rieselfähigkeit haben und gleichzeitig eine gute Flammschutzwirkung erzielen.

Die Erfindung betrifft daher eine halogenfreie Flammschutzmittelmischung, enthaltend 1 bis 99 Gew.-% einer Komponente A und 1 bis 99 Gew.-% einer Komponente B, wobei Komponente A 85 bis 99,9995 Gew.-%, vorzugsweise 92 bis 99,95 Gew.-% eines festen Aluminiumdiethylphosphinsäuresalzes und 0,005 bis 15 Gew.-%, vorzugsweise 0,05 bis 8 Gew.-% nicht-brennbare Zusätze enthält, wobei es sich bei den Zusätzen um Aluminiumphosphate, Aluminiumhydrogenphosphate, Calciumhydrogenphosphate, Calciumagnesiumphosphate, Calciumaluminiumphosphat, Calciumcarbonatphosphat, Calciumphosphate, Cerphosphate, Cerhydrogenphosphat, Lithiumphosphat, Lithiumhydrogenphosphat, Magnesiumphosphate, Magnesiumhydrogenphosphate, Kaliumphosphate, Kaliumaluminiumphosphat, Kaliumhydrogenphosphate, Natriumhydrogenphosphate, Natriumhydratphosphate, Natriumaluminiumphosphate und/oder ihre Hydrate handelt, und es sich bei der Komponente B um Aluminiumphosphit handelt wobei es sich bei den Aluminiumphosphiten um solche der Formeln (I), (II) und/oder (III)

Al₂(HPO₃)₃× (H₂O)_{q} (I)

in der
- q: 0 bis 4
bedeutet,

Al_{2,00}M_{z}(HPO₃)_{y}(OH)ᵥ × (H₂O)_{w} (II)

in der
- M: Alkalimetallionen
- z: 0,01 bis 1,5
- y: 2,63 bis 3,5
- v: 0 bis 2 und
- w: 0 bis 4
bedeutet,

Al_{2,00}(HPO₃)ᵤ(H₂PO₃)ₜ × (H₂O)ₛ (III)

in der
- u: 2 bis 2,99
- t: 2 bis 0,01 und
- s: 0 bis 4
bedeutet,
und/oder um Mischungen von Aluminiumphosphit der Formel (I) mit schwerlöslichen Aluminiumsalzen und stickstofffreien Fremdionen, um Mischungen von Aluminiumphosphit der Formel (III) mit Aluminiumsalzen, um Aluminiumphosphit [Al(H₂PO₃)₃], um sekundäres Aluminiumphosphit [Al₂(HPO₃)₃], um basisches Aluminiumphosphit [Al(OH)(H₂PO₃)₂*2aq], um
Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1, um Al₄H₆P₁₆O₁₈ und/oder um Mischungen von 0 - 99,9 Gew.-% Al₂(HPO₃)₃*nH₂O mit 0,1 - 100 Gew.-% Natriumaluminiumphosphit handelt, mit der Maßgabe, dass die Flammschutzmittelmischung keine Bindemittel enthält.

Besonders bevorzugt enthält die halogenfreie Flammschutzmittelmischung 20 bis 80 Gew.-% der Komponente A und 20 bis 80 Gew.-% der Komponente B.

Bei den Phosphaten handelt es sich um Aluminiumphosphate, Aluminiumhydrogenphosphate, Aluminiumchloridphosphat, Calciumhydrogenphosphate, Calciumagnesiumphosphate, Calciumchloridphosphate, Calciumaluminiumphosphat, Calciumcarbonatphosphat, Calciumphosphate, Cerphosphate, Cerhydrogenphosphat, Lithiumphosphat, Lithiumhydrogenphosphat, Magnesiumphosphate, Magnesiumhydrogenphosphate, Kaliumphosphate, Kaliumaluminiumphosphat, Kaliumhydrogenphosphate, Natriumhydrogenphosphate, Natriumhydratphosphate, Natriumaluminiumphosphate und/oder ihre Hydrate.

Bevorzugt handelt es sich bei den Aluminiumphosphiten um eine Mischung von 50 - 99 Gew.-% Al₂(HPO₃)₃ × (H₂O)_{q} in der q 0 bis 4 bedeutet und 1 - 50 Gew.-% Natriumaluminiumphosphit.

Bevorzugt handelt es sich bei den Aluminiumphosphiten auch um eine Mischung von 50 - 99 Gew.-% Al₂(HPO₃)₃ × (H₂O)_{q} in der q 0 bis 4 bedeutet und 1 - 50 Gew.-% Al_{2,00}M_{z}(HPO₃)_{y}(OH)ᵥ × (H₂O)_{w} (II) in der M Natrium, z 0,005 bis 0,15, y 2,8 bis 3,1, v 0 bis 0,4 und w 0 bis 4 bedeutet.

Bevorzugt weist in der halogenfreien Flammschutzmittelmischung die Komponente A eine mittlere Teilchengröße d50 von 0,05 bis 10µm und die Komponente B eine mittlere Teilchengröße d50 von 0,05 bis 10µm sowie eine Restfeuchte von 0,05 bis 8 Gew.-% auf.

Die Erfindung betrifft auch ein Verfahren zur Herstellung einer halogenfreien Flammschutzmittelmischung nach einem oder mehreren der Ansprüche 1 bis 7, dadurch gekennzeichnet, dass man die Komponenten A und B in Pulverform miteinander mischt und gegebenenfalls siebt.

Die Erfindung betrifft weiterhin ein Verfahren zur Herstellung der halogenfreien Flammschutzmittelmischung dadurch gekennzeichnet, dass man ein Aluminiumdiethylphosphinsäuresalz mit nicht-brennbaren Zusätzen und der Komponente B in Pulverform miteinander mischt.

Die Erfindung betrifft ebenfalls die Verwendung einer halogenfreien Flammschutzmittelmischung nach einem oder mehreren der Ansprüche 1 bis 7 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Waschund Reinigungsmittelanwendungen, in Elektronikanwendungen.

Bevorzugt ist die Verwendung einer halogenfreien Flammschutzmittelmischung nach einem oder mehreren der Ansprüche 1 bis 7 in oder als Flammschutzmittel, als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren FlammschutzmittelMischungen.

Die Erfindung betrifft auch flammgeschützte thermoplastische oder duroplastische Polymerformmassen, Polymer-Formkörper, -Filme, -Fäden und/oder -Fasern, enthaltend 0,1 bis 45 Gew.-% halogenfreie Flammschutzmittelmischung nach einem oder mehreren der Ansprüche 1 bis 7, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt sind dabei flammgeschützte thermoplastische oder duroplastische Polymerformmassen, Polymer-Formkörper, -Filme, -Fäden und/oder -Fasern, enthaltend 1 bis 30 Gew.-% halogenfreie Flammschutzmittelmischung nach einem oder mehreren der Ansprüche 1 bis 7, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew.-% beträgt.

Die Erfindung betrifft weiterhin flammgeschützte thermoplastische oder duroplastische Polymerformmassen, Polymer-Formkörper, -Filme, -Fäden und/oder -Fasern, enthaltend eine halogenfreie Flammschutzmittelmischung nach einem oder mehreren der Ansprüche 1 bis 7, dadurch gekennzeichnet, dass es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

Besonders bevorzugt handelt es sich bei dem Polymer um Polyamid 4/6 (Poly(tetramethylen-adipamid), Poly-(tetramethylen-adipinsäurediamid), um Polyamid 6 (Polycaprolactam, Poly-6-aminohexansäure), um Polyamid 6/6 ((Poly(N,N'-hexamethyleneadipinediamid) und/oder um HTN (Hochtemperatur-Nylon).

Besonders bevorzugt enthält die Komponente A, 99,1 bis 99,95 Gew.-% festes Aluminiumdiethylphosphinat und 0,05 bis 0,9 Gew.-% nicht-brennbare Zusätze nach Anspruch 1.

Bevorzugt ist hierbei eine halogenfreie Flammschutzmittelmischung, enthaltend 1 bis 99 Gew.-% einer Komponente A und 1 bis 99 Gew.-% einer Komponente B, wobei Komponente A 85 bis 99,995 Gew.-% eines Diethylphosphinsäuresalzes der vorgenannten Metalle und 0,005 bis 15 Gew.-% nicht-brennbare Zusätze nach Anspruch 1 enthält und es sich bei der Komponente B um Aluminiumphosphit handelt.

Bevorzugt ist auch eine halogenfreie Flammschutzmittelmischung, enthaltend 10 bis 90 Gew.-% einer Komponente A und 10 bis 90 Gew.-% einer Komponente B, wobei Komponente A 85 bis 99,995 Gew.-% eines Aluminiumdiethylphosphinsäuresalzes und 0,005 bis 15 Gew.-% nicht-brennbare Zusätze nach Anspruch 1 enthält und es sich bei der Komponente B um Aluminiumphosphit handelt.

Ebenfalls bevorzugt ist eine halogenfreie Flammschutzmittelmischung, enthaltend 20 bis 80 Gew.-% einer Komponente A und 20 bis 80 Gew.-% einer Komponente B, wobei Komponente A 85 bis 99,995 Gew.-% eines Aluminiumdiethylphosphinsäuresalzes und 0,005 bis 15 Gew.-% nicht-brennbare Zusätze nach Anspruch 1 enthält und es sich bei der Komponente B um Aluminiumphosphit handelt.

Besonders bevorzugt ist eine halogenfreie Flammschutzmittelmischung, enthaltend 1 bis 99 Gew.-% einer Komponente A und 1 bis 99 Gew.-% einer Komponente B, wobei Komponente A 92 bis 99,9 Gew.-% eines Aluminiumdiethylphosphinsäuresalzes und 0,1 bis 8 Gew.-% nicht-brennbare Zusätze nach Anspruch 1 enthält und es sich bei der Komponente B um Aluminiumphosphit handelt.

Bevorzugte Phosphate sind Aluminiumphosphate AlPO₄, Al₂O₃*P₂O₅, Al₃₆P₃₆O₁₄₄, AL₁₆P₁₆O₆₄, Al₈P₈O₂₂, Al₂O₃*xP₂O₅, Al₂O₃*0,95P₂O₅, Al₂O₃*0,86P₂O₅, Al₁₂P₁₂O₄₈, Al₂P₆O₁₈, Aluminumphosphathydrat Al₂P_{1,94}O_{7,85}*2H₂O, AlPO₄*xH₂O, AlPO₄*0,45H₂O, Al₃₂P₃₂O₁₂₈*xH₂O, Al₆P₆O₂₄*4H₂O, AlPO₄*1,67H₂O, Al₄(P₂O₇)₃*12H₂O, Al₂P₂O₈*3H₂O, AlP₆O₁₈*9,5H₂O, Al₆P₆O₂₁*8H₂O, Aluminiumhydrogenphosphat Al(H₂PO₄)₃, H₂(AlPOPO₄)₃, Aluminumhydrogenphosphathydrat AlH₆(PO₄)₃*2H₂O, AlH₃(PO₄)₂*nH₂O, Al(HP₂O₇)*2,5H₂O, AlH₃(PO₄)₂*3H₂O, Aluminiumchloridphosphat Al(PO₂Cl₂)₃, Calciumhydrogenphosphat Ca₃H₂P₄O₁₄, Ca(H₂PO₄)₂, CaH₂PO₇, Ca₄H₂(P₃O₁0)₂, CaPO₃(OH), Calciumagnesiumphosphat Ca₃Mg₃(PO₄)₂, Ca₇Mg₂P₆O₂₄, CaMgP₂O₇, (Ca,Mg)₃(PO₄)₂, Calciumchloridphosphat Ca₂PO₄Cl, Calciumphosphtat Ca₃P₂O₇, CaP₄O₁₁, Ca₂P₆O₁₇, Ca₃(P₅O₁₄)₂, CaP₂O₆, CaP₂O₇, Ca₄P₆O₁₉, Ca₄(PO₄)₂, Caₓ₊₂P₂ₓO₆ₓ₊₂, Calciumaluminiumphosphate Ca₉Al(PO₄)₇, Calciumcarbonatphosphat Ca₁₀(PO₄)₆CO₃, Calciumphosphathydrat Ca₂P₂O₇*2H₂O, beta-Ca₂(P₄O₁₂)*4H₂O, Ca₃(PO₃)₆*10H₂O, Ca₄P₈O₂₄*16H₂O, Ca₂P₂O₇*2H₂O, Ca₂(P₄O₁₂)*4H₂O, Ca₂P₂O₇*4H₂O, Ca₃(PO₄)₂*xH₂O, CaAlH(PO₄)₂*6H₂O, Ca₈H₂(PO₄)₆)*5H₂O, Ca₄H(PO₄)₃*5H₂O, Ca₃H₂(P₂O₇)₂*4H₂O, Ca_{1,5}HP₂O₇*2H₂O, Ca(H₂PO₄)₂*H₂O, Ca₃H₂(P₂O₇)₂*H₂O, Cerphosphat CePO₄, CeP₂O₇, Ca(PO₃)₄, CaP₅O₁₄, CeP₃O₉, Ce₄(P₂O₇)₃, Calciumphosphat alpha-, beta-, gamma-Ca₂P₂O₇, CaP₄O₁₁, Ca₂P₆O₁₇, Alpha-CaP₄O₁₁, Ca₃(P₅O₁₄)₂, beta-, delta-, gamma-Ca(PO₃)₂, alpha-, beta-Ca-P₂O₆, Ca₄P₆O₁₉, alpha-, beta-, gamma-Ca₃(PO₄)₂, Caₓ₊₂P₂ₓO₆ₓ₊₂, Cerphosphat CePO₄, CeP₂O₇, Ca(PO₃)₄, CeP₅O₁₄, CeP₃O₉, Ce₄(P₂O₇)₃, CeP₅O₁₄, Cerhydrogenphosphat CeH₂P₂O₈, Lithiumphosphathydrat Li₄P₄O₁₂*4H₂O, Li₈P₈O₂₄*10H₂O, Li₆P₆O₁₈*6H₂O, Li₆P₈O₂₄*6H₂O, Li₄P₄O₁₂*nH₂O, Li₆P₆O₁₈*nH₂O, Li₃P₃O₉*3H₂O, Lithiumhydrogenphosphat Li₃HP₂O₇*H₂O, Magnesiumphosphathydrat Mg₄P₈O₂₄*19H₂O, Mg₂P₄O₁₂*8H₂O, Mg₃(PO₄)₂*nH₂O, Mg₂P₂O₇*2H₂O, Magnesiumhydrogenphosphathydrat MgHPO₄*nH₂O, Mg(H₂PO₄)₂*nH₂O, Kaliumphosphathydrat K₈P₈O₂₄*6H₂O, (KPO₃)₄*2H₂O, K₆P₆O₁₈*3H₂O, alpha-, beta-K₅P₃O₁₀*nH₂O, K₁₀P₁₀O₃0*4H₂O, K₄P₂O₇*nH₂O, K₅P₃O₁₀*nH₂O, K₃PO₄*nH₂O, K₁₀P₆O₂₀*H₂O, Kaliumaluminiumphosphathydrat K₆Al₂P₆O₂₁*12H₂O, Kaliumhydrogenphosphathydrat K₂H₂P₂O₇*nH₂O, K₃H₂P₂O₇*0,5H₂O, KH₃P₂O₇*H₂O, K₃H₂P₃O₁0*H₂O, K₄HP₃O₁₀*xH₂O, KH₃(PO₄)₂*₂H₂O, K₂H₃P₃O₁₀*2H₂O, K₃HP₂O₇*3H₂O, K₂HPO₄*3H₂O, K₃HP₂O₇*3H₂O, Natriumhydrogenphosphathydrat Na₃HP₂O₆*9H₂O, Na₃HP₂O₇*H₂O, Na₂H₂P₂O₇*6H₂O, Na₂H₂P₂O₆*6H₂O, NaH₂PO₄*12H₂O, NaH₂PO₄*H₂O, NaH₃P₂O₆*xH₂O, beta-Na₂HPO₄*12H₂O, Na₃H₂P₃O₁₀*1,4H₂O, 2NaH₂PO₄*Na₂HPO₄*2H₂O, NaH₂PO₄*2H₂O, NaH₂PO₂*H₂O, Na₂HPO₄*nH₂O, Na₄HP₃O₁₀*H₂O, Na₂HPO₃*5H₂O, Na₃HP₂O₇*nH₂O, Na₃H₂P₃O₁₀*1,5H₂O, Natriumhydratphosphat Na₃P₃O₉*nH₂O, Na₅P₃O₁₀*6H₂O, (NaPO₃)₃*nH₂O, Na₆P₆O₁₈*6H₂O, Na₅(P₅O₁₅)*4H₂O, Na₄P₂O₆*nH₂O, Na₄P₂O₇*10H₂O, Na₄P₄O₁₂*4H₂O, (NaPO₂)₆*nH₂O, Natriumaluminiumphosphathydrat Na₂AlP₃O₁₀*4H₂O, Na₂AlP₂O₁₀*2H₂O, Na₂AlP₃O₁₀, Na₂(AlP₃O₁₀)*2H₂O, Na₃Al(PO₄)₂*1,5H₂O, Na₂Al₆P₂O₁₅*10H₂O.

Bevorzugte erfindungsgemäße halogenfreie Flammschutzmittelmischungen, die Phosphat nach Anspruch 1 als nicht-brennbaren Zusatz enthalten sind:
I) Halogenfreie Flammschutzmittelmischung, enthaltend 1 bis 99 Gew.-% einer Komponente A und 1 bis 99 Gew.-% Aluminiumphosphit, wobei Komponente A 95 bis 99,995 Gew.-% Aluminiumd-iethylphosphinsäuresalz und 0,005 bis 5 Gew.-% Phosphat nach Anspruch 1 enthält.
II) Halogenfreie Flammschutzmittelmischung, enthaltend 10 bis 90 Gew.-% einer Komponente A und 10 bis 90 Gew.-% Aluminiumphosphit, wobei Komponente A 95 bis 99,995 Gew.-% Aluminiumd-Diethylphosphinsäuresalz und 0,005 bis 5 Gew.-% Phosphat nach Anspruch 1 enthält.
III) Halogenfreie Flammschutzmittelmischung, enthaltend 20 bis 80 Gew.-% einer Komponente A und 20 bis 80 Gew.-% Aluminiumphosphit, wobei Komponente A 95 bis 99,995 Gew.-% Aluminiumdiethylphosphinsäuresalz und 0,005 bis 5 Gew.-% Phosphat nach Anspruch 1 enthält.
IV) Halogenfreie Flammschutzmittelmischung, enthaltend 1 bis 99 Gew.-% einer Komponente A und 1 bis 99 Gew.-% Aluminiumphosphit, wobei Komponente A 99,3 bis 99,95 Gew.-% Aluminiumdiethylphosphinsäuresalz und 0,05 bis 0,7 Gew.-% Phosphat nach Anspruch 1 enthält.

Insgesamt sind also halogenfreie Flammschutzmittelmischungen bevorzugt, die 1 bis 99 Gew.-% einer Komponente A und 1 bis 99 Gew.-% einer Komponente B enthalten, wobei Komponente A 95 bis 99,995 Gew.-% eines Aluminiumdiethylphosphinsäuresalzes und 0,005 bis 5 Gew.-% Phosphate nach Anspruch 1 enthält und es sich bei der Komponente B um Aluminiumphosphit handelt.

Unter den Begriff Aluminiumphosphit im Sinne der Erfindung fallen eine Reihe von Verbindungen, wie sie nachfolgend definiert sind.

Zu den erfindungsgemäß eingesetzten Aluminiumphosphiten gehört ein Alkali-Aluminium-Mischphosphit der Formel

Al_{2,00}M_{z}(HPO₃)_{y}(OH)ᵥ * (H₂O)_{w} (II)

in der
- M: Alkalimetallionen,
- z: 0,01 bis 1,5,
- y: 2,63 bis 3,5,
- v: 0 bis 2 und w 0 bis 4,
bedeutet,

Ein solches erfindungsgemäß eingesetztes Aluminiumphosphit ist u. a. ein Gemisch von Al₂(HPO₃)₃*nH₂O (mit n = 0 - 4) und Natriumaluminiumphosphit. Das Natriumaluminiumphosphit entspricht dabei der Formel (II), so z. B. der Summenformel Al_{2,0}Na_{0,6}(HPO₃)_{2,89}*0,28H₂O.

Die Röntgenpulverdaten von Natriumaluminiumphosphit sind in Beispiel 78 angegeben und die Röntgenpulverdaten von Al₂(HPO₃)₃*4H₂O zum Vergleich in Beispiel 82.

Erfindungsgemäß eingesetztes Aluminiumphosphit ist auch ein Gemisch von 0 - 99,9 Gew.-% Al₂(HPO₃)₃*nH₂O und 0,1 - 100 Gew.-% Natriumaluminiumphosphit.

Ein bevorzugtes erfindungsgemäß eingesetztes Aluminiumphosphit ist ein Gemisch von 1 - 50 Gew.-% Al₂(HPO₃)₃*nH₂O und 1 - 50 Gew.-% Natriumaluminiumphosphit.

Ganz besonders bevorzugt ist ein erfindungsgemäß eingesetztes Aluminiumphosphit aus einem Gemisch von 5 - 75 Gew.-% Al₂(HPO₃)₃*nH₂O und 5 - 25 Gew.-% Natriumaluminiumphosphit.

Ein erfindungsgemäß einsetzbares Aluminiumphosphit ist auch ein Alkali-Aluminium-Mischphosphit nach der Formel

AlₓM_{z}(HPO₃)_{y}(OH)ᵥ *(H₂O)_{w} (II)

in der
- x: 1,00 bis 2,0,
- M: Alkalimetallionen,
- z: 0,01 bis 2,7,
- y: 2,63 bis 3,5,
- v: 0 bis 2 und w 0 bis 6 bedeutet,

Ein erfindungsgemäßes einsetzbares Aluminiumphosphit ist aber auch ein Gemisch folgender Zusammensetzung:
80 - 99,9 Gew.-% Al₂(HPO₃)₃
0,1 - 25 Gew.-% Wasser
0 - 10 Gew.-% Sulfat
0 - 15 Gew.-% Natrium
0 - 10 Gew.-% Phosphat

Ebenfalls erfindungsgemäß einsetzbar ist ein Aluminiumphosphit ist ein solches der folgenden Zusammensetzung:
80 - 99,9 Gew.-% Al₂(HPO₃)₃
0,1 - 25 Gew.-% Wasser
0 - 14,8 Gew.-% Natriumsulfat
0 - 7,4 Gew.-% Natriumphosphat

Zu den erfindungsgemäßen einsetzbaren Aluminiumphosphiten gehört auch das Aluminium-Hydrogenphosphit der Formel (III)

Al_{2,00}(HPO₃)ᵤ(H₂PO₃)ₜ * (H₂O)ₛ (III)

in der
- u: 2 bis 2,99,
- t: 2 bis 0,01 und
- s: 0 bis 4 bedeutet.

Erfindungsgemäß einsetzbares Aluminiumphosphit ist auch eine Mischung von Aluminiumphosphit mit schwerlöslichen Aluminiumsalzen und stickstofffreien Fremdionen, enthaltend 80 bis 99,898 Gew.-% Aluminiumphosphit der Formel (I)

Al₂(HPO₃)₃ *H₂O (I)

worin
x 0 bis 4 bedeutet,
0,1 bis 10 Gew.-% schwerlösliche Aluminiumsalze und
0,002 bis 10 Gew.-% stickstofffreie Fremdionen.

Bevorzugt handelt es sich bei den schwerlöslichen Aluminiumsalzen um Aluminumhydroxid, Aluminiumhydroxychlorid, Polyaluminiumhydroxyverbindungen, Aluminiumcarbonate, Hydrotalcite (Mg₆Al₂(OH)₁₆CO₃ * nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Alumiumsulfat und/oder Alunit.

Bevorzugt handelt es sich bei den stickstofffreien Fremdionen um Chloride, komplexe Chloride, Bromide; um Hydroxide, Peroxide, Peroxidhydrate, Sulfite, Sulfate, Sulfathydrate, saure Sulfate, Hydrogensulfate, Peroxosulfate, Peroxodisulfate; um Nitrate; um Carbonate, Percarbonate, Stannate; um Borate, Perborate, Perborathydrate; um Formiate, Acetate, Propionate, Lactate und/oder Ascorbate und/oder um Kationen der Elemente Li, Na, K, Mg, Ca, Ba, Pb, Sn, Cu, Zn, La, Ce, Ti, Zr, V, Cr, Mn, Fe, Co und/oder Ni.

Erfindungsgemäß einsetzbares Aluminiumphosphit ist weiterhin auch eine Mischung von Aluminium-Hydrogenphosphiten der Formel (III)

Al_{2,00}(HPO₃)ᵤ(H₂PO₃)ₜ *(H₂O)ₛ (III)

mit Aluminiumsalzen, enthaltend
91 bis 99,9 % Aluminium-Hydrogenphosphite der Formel (III)
0,1 bis 9 % Aluminiumsalze und
0 bis 50 % (Kristall-)Wasser
wobei in Formel (III)
   - u: 2 bis 2,99,
   - t: 2 bis 0,01 und
   - s: 0 bis 4 bedeutet.

Zu den erfindungsgemäß einsetzbaren Aluminiumphosphiten gehören unter anderem Aluminiumphosphit (Al(H₂PO₃)₃), sekundäres Aluminiumphosphit, basisches Aluminiumphosphit (Al(OH)(H₂PO₃)₂*2aq), Aluminiumphosphittetrahydrat (Al₂(HPO₃)₃*4aq), Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder A1₄H₆P₁₆O₁₈.

Bevorzugt beträgt die Restfeuchte der erfindungsgemäßen halogenfreien Flammschutzmittelmischung 0,01 bis 10 Gew.-%, insbesondere 0,1 bis 2 Gew.-%.

Bevorzugt beträgt die mittlere Teilchengröße dso der erfindungsgemäßen halogenfreien Flammschutzmittelmischung 0,1 bis 1.000 µm, insbesondere 10 bis 100 µm.

Bevorzugt beträgt die Schüttdichte der erfindungsgemäßen halogenfreien Flammschutzmittelmischung 80 bis 800 g/l, insbesondere 200 bis 700 g/l.

Die Rieselfähigkeit der erfindungsgemäßen halogenfreien Flammschutzmittelmischung wird nach Pfrengle (DIN ISO 4324 Tenside, Pulver und Granulate, Bestimmung des Schüttwinkels, Dez. 1983, Beuth Verlag Berlin) bestimmt.

Danach wird die vorgenannte Rieselfähigkeit durch die Ermittlung der Höhe des Kegels eines Pulvers oder Granulates beziehungsweise des Verhältnisses von Kegelradius zu Kegelhöhe bestimmt. Der Kegel wird erzeugt, indem eine spezielle Menge der zu untersuchenden Substanz in einer definierten Apparatur durch einen speziellen Trichter ausgeschüttet wird. Der definierte Kegelradius wird erzeugt, indem der Kegel aufgeschüttet wird, bis das Produkt über eine vom Untergrund erhabene kreisrunde Platte überfließt. Der Radius der Platte ist festgelegt. Der Trichter hat einen Innendurchmesser von 10 mm. Die Platte hat einen Radius von 50 mm. Es werden 5 Bestimmungen durchgeführt und gemittelt. Die Höhe wird in Millimeter mit einer Meßleiste von der Platte ausgehend, zum Scheitel des Kegels ausgemessen. Das Verhältnis von Kegelradius (50 mm) zu Kegelhöhe wird aus dem Mittelwert berechnet.

An einer halogenfreien Flammschutzmittelmischung nach dem Stand der Technik wurden Schüttkegelhöhen von 29,9 bis 49,9 mm entsprechend einer Spanne von 20 mm bestimmt und Verhältnisse von Radius zu Höhe (= cot alpha) von 1,67 bis 1,00 entsprechend einer Spanne von 0,67.

Die erfindungsgemäßen halogenfreien Flammschutzmittelmischungen können nach verschiedenen Methoden hergestellt werden.

Bevorzugt wird Aluminiumdiethylphosphinat direkt mit dem nicht-brennbaren Zusatz und Aluminiumphosphit gemischt.

Auch bevorzugt wird Aluminiumdiethylphosphinat enthaltend den nicht-brennbaren Zusatz mit Aluminiumphosphit gemischt.

Erfindungsgemäß wird das Aluminiumdiethylphosphinat, welches den nicht-brennbaren Zusatz enthält, hergestellt, in dem man Diethylphosphinsäure mit elementarem Metall oder einem Metallsalz 0,01 bis 1 Stunden bei 0 bis 300 °C umsetzt.

Bevorzugte Metallsalze sind dabei Metalloxide, gemischte Metall-Oxid-Hydroxide, Hydroxide etc.

In einer anderen erfindungsgemäßen Ausführungsform wird das den nicht-brennbaren Zusatz enthaltende Aluminiumdiethylphosphinat hergestellt, indem man eine Diethylphosphinsäure mit einer freien Base 0,01 bis 1 Stunden bei 0 bis 300 °C umsetzt.

In einer weiteren Ausführungsform wird das den nicht-brennbaren Zusatz enthaltende Aluminiumdiethylphosphinat hergestellt, indem man eine Diethylphosphinsäure in Form eines Alkalimetall-Salzes mit einem Salz des gewünschten Kations 0,01 bis 1 Stunden bei 0 bis 300 °C umsetzt.

Bevorzugte Alkalimetall-Salze sind Natrium- und Kaliumsalze.

Bevorzugte Salze, die die gewünschten Kationen liefern, sind dabei Acetate, Hydroxoacetate, Chloride, Hydroxochloride, Nitrate, Sulfate, Hydroxosulfate, Phosphonate und Phosphite. Bevorzugt ist deren Konzentration in wässriger Lösung 5 bis 95 % (wasserfreier Feststoff), besonders bevorzugt 20 bis 50 Gew.-%.

In einer anderen Ausführungsform wird das den nicht-brennbaren Zusatz enthaltende Aluminiumdiethylphosphinat hergestellt, indem man eine Diethylphosphinsäure in Form eines reaktiven Derivates mit einem Derivat des gewünschten Kations 0,01 bis 1 Stunden bei 0 bis 300 °C umsetzt. Bevorzugte Diethylphosphinsäurederivate sind Diethylphosphinsäureester, -pyroester, -chloride, -phosphate, -acetate, -phenolate etc.

In der Ausführungsform in der das Aluminiumdiethylphosphinat Phosphat als nicht-brennbaren Zusatz enthält, beträgt der Phosphatgehalt 50 ppm bis 5 Gew.-%, besonders bevorzugt 500 ppm bis 7000 ppm.

Die Erfindung umfasst auch flammgeschützte Polymerformmassen, enthaltend
1 bis 50 Gew.-% der erfindungsgemäßen halogenfreien Flammschutzmittelmischung
1 bis 99 Gew.-% Polymer oder Mischungen derselben,
0 bis 60 Gew.-% Additive und
0 bis 60 Gew.-% Füllstoff.
Die Erfindung umfasst bevorzugt flammgeschützte Polymerformmassen, enthaltend
5 bis 30 Gew.-% der erfindungsgemäßen halogenfreien
Flammschutzmittelmischung,
15 bis 85 Gew.-% Polymer oder Mischungen derselben,
5 bis 40 Gew.-% Additive und
5 bis 40 Gew.-% Füllstoff.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um, um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha -methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont , Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10 , Fa. DuPont), Polyamid 6/12 (Poly(hexamethylene dodecanediamid), Nylon^{®} 6/12 , Fa. DuPont), Polyamid 6/66 (Poly(hexamethylene adipamide-co-caprolactam), Nylon^{®} 6/66 , Fa. DuPont), Polyamid 7 (Poly-7-aminoheptansäure, Nylon^{®} 7, Fa. DuPont), Polyamid 7/7 (Polyheptamethylenpimelamid, Nylon^{®} 7/7, Fa. DuPont), Polyamid 8 (Poly-8-aminooctansäure, Nylon^{®} 8, Fa. DuPont), Polyamid 8/8 (Polyoctamethylensuberamid, Nylon^{®} 8/8, Fa. DuPont), Polyamid 9 (Poly-9-aminononansäure, Nylon^{®} 9, Fa. DuPont), Polyamid 9/9 (Polynonamethylenazelamid, Nylon^{®} 9/9, Fa. DuPont), Polyamid 10 (Poly-10-amino-decansäure, Nylon^{®} 10, Fa. DuPont), Polyamid 10/9 (Poly(decamethylenazelamid), Nylon^{®} 10/9, Fa. DuPont), Polyamid 10/10 (Polydecamethylensebacamid, Nylon^{®} 10/10, Fa. DuPont), Polyamid 11 (Poly-11-aminoundecansäure, Nylon^{®} 11, Fa. DuPont), Polyamid 12 (Polylauryllactam , Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Eingesetzt werden können auch aromatische Polyamide wie PA4T, PA6T, PA9T, PA10T, PA11T und/oder MXD6, amorphe Polyamide wie 6I/X und TPE-A "rigid" und "soft".

Bevorzugt handelt es sich bei den Polymeren auch um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, FA. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate sowie um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Additive für die erfindungsgemäßen halogenfreien Flammschutzmittelmischungen sind z. B. Synergisten.

Erfindungsgemäß werden als Synergisten Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate bevorzugt.

Weiterhin sind als Synergisten Melaminkondensationsprodukte wie Melam, Melem und/oder Melon bevorzugt.

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin.

Erfindungsgemäß sind als Synergisten weiterhin bevorzugt stickstoffhaltige Phosphate der Formeln (NH₄)_{y}H_{3-y}PO₄ bzw. (NH₄PO₃)_{z}, mit y gleich 1 bis 3 und z gleich 1 bis 10.000

Bevorzugte weitere Additive in den erfindungsgemäßen Flammschutzmittel-Zusammensetzungen sind Zinkverbindungen, z. B. Zinkoxid, Zinkhydroxid, Zinnoxidhydrat, Zinkcarbonat, Zinkstannat, Zinkhydroxystannat, basisches Zink-Silikat, Zinkphosphat, Zinkborat, Zinkmolybdat oder Zinksulfide.

Bevorzugte weitere Additive in den erfindungsgemäßen Flammschutzmittel-Zusammensetzungen sind solche aus der Gruppe der Carbodiimide und/oder (Poly-) isocyanate.

Bevorzugte weitere Additive kommen aus der Gruppe der sterisch gehinderten Phenole (z. B. Hostanox^{®} OSP 1), sterisch gehinderten Amine und Lichtstabilisatoren (z. B. Chimasorb^{®} 944, Hostavin^{®}-Typen), Phosphonite und Antioxidantien (z. B. Sandostab^{®} P-EPQ der Fa. Clariant) und Trennmittel (Licomont^{®}-Typen der Fa. Clariant).

Bevorzugte weitere Füllstoffe sind in den erfindungsgemäßen Flammschutzmittel-Zusammensetzungen sind Sauerstoffverbindungen des Siliciums, Magnesiumverbindungen, z. B. Metallcarbonate von Metallen der zweiten Hauptgruppe des Periodensystems, Magnesiumoxid, Magnesiumhydroxid, Hydrotalcite, Dihydrotalcit, Magnesium-Carbonate oder Magnesium-Calcium-Carbonate, Calciumverbindungen, z. B. Calciumhydroxid, Calciumoxid, Hydrocalumit, Aluminiumverbindungen, z. B. Aluminiumoxid, Aluminiumhydroxid, Böhmit, Gibbsit oder Aluminiumphosphat, roter Phosphor, Zink- oder Aluminiumverbindungen; ebenso Glasfasern und Glaskugeln.

Erfindungsgemäß einsetzbare Compoundieraggregate sind Mehrzonenschnecken-Extruder mit Dreizonenschnecken und/oder Kurzkompressionsschnecken; auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Erfindungsgemäß einsetzbare Compoundieraggregate sind auch Doppelschneckenextruder, z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder, z. B. der Fa. 3+Extruder GmbH, Laufen, mit einem Ring von drei bis zwölf kleinen Schnecken, die um einem statischen Kern rotieren und/oder Planetwalzenextruder, z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. -70-Typen der Fa. Krauss-Maffei Berstorff.

Erfindungsgemäße wirksame Schneckenlängen sind bei Einwellenextrudern bzw. Einschneckenextrudern 20 bis 40D.

Erfindungsgemäße wirksame Schneckenlängen (L) bei Mehrzonenschneckenextudern sind z. B. 25D mit Einzugzone (L=10D), Übergangszone (L=6D), Ausstoßzone (L=9D).

Erfindungsgemäß wirksame Schneckenlängen bei Doppelschneckenextrudern sind 8 bis 48D.

Herstellung, Verarbeitung und Prüfung von flammhemmenden PolymerFormmassen und Kunststoff-Formkörpern.

Die Flammschutzmittelkomponenten werden mit dem Polymergranulat und evtl. Additiven vermischt und über den Seiteneinzug eines Doppelschnecken-Extruders (Typ Leistritz ZSE 27/44D) bei Temperaturen von 230 bis 260°C (glasfaserverstärktes PBT), 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 240 bis 300 °C zu Prüfkörpern verarbeitet und anhand des UL 94-Tests (Underwriter Laboratories) auf Flammwidrigkeit geprüft und klassifiziert.

### Beispiel 4 (Vergleich)

80 Gew. % Aluminiumdiethylphosphinat und 20 Gew. % sekundäres Aluminiumphosphit werden in eine Polyethylenflasche so eingewogen, dass sich ca. 1 kg Flammschutzmischung ergibt. In einem Überkopfmischer wird die Mischung ca. 2 Stunden gemischt, bis Homogenität erreicht ist. Nach Pfrengle wurden folgende Kenngrößen ermittelt:
Spanne des Verhältnisses Radius/Höhe (=cot alpha): 0,67
Spanne der Schüttkegelhöhe: 20 mm.

### Beispiele 25 bis 33

Aluminiumdiethylphosphinat, das einen Zusatz aus Phosphat enthält, wird mit Aluminiumphosphit in eine Polyethylenflasche so eingewogen, dass sich ca. 1 kg Flammschutzmischung ergibt und diese in einem Überkopfmischer ca. 2 Stunden gemischt, bis Homogenität erreicht ist. Versuche zeigen eine gleichmäßigere Rieselfähigkeit bei den Produkten der Beispiele 25 bis 33 als beim Produkt ohne Zusätze aus dem Vergleichsbeispiel 4.

### Beispiel 74

Gemäß der allgemeinen Vorschrift werden flammgeschützten Polymerformmassen auf Basis von Polybutylenterephthalat verarbeitet. Nach Trocknung werden die Formmassen auf einer Spritzgießmaschine zu Polymerformkörper verarbeitet. Es wurde eine UL-94 Klassifizierung von V-0 bestimmt.

**Tabelle 3: Flammschutzmittelmischungen aus Diethylphosphinsäuresalz, Phosphat und Aluminiumphosphit**

| Beispiel | 25 | 26 | 27 | 28 | 29 | 30 | 31 | 32 | 33 |
|---|---|---|---|---|---|---|---|---|---|
| Diethylphosphinsäuresalz [Gew.%] | 99 | 99 | 1 | 90 | 90 | 10 | 80 | 80 | 50 |
| Zusatz | AluminiumPhosphat AlPO₄ | AluminiumPhosphat AlPO₄ | AluminiumPhosphat AlPO₄ | AluminiumPhosphat AlPO₄ | Natrium-Dihydrogenphosphat NaH₂PO₄ | Aluminium-Dihydrogenphosphat (Al(H₂PO₄)₃) | AluminiumPhosphat AlPO₄ | Natrium-Dihydrogenphosphat NaH₂PO₄ | Aluminium-Dihydrogenphosphat (Al(H₂PO₄)₃) |
| dito, Menge [Gew.-%] | 6,4 | | | 6,4 | | | 6,4 | | |
| dito, Menge [ppm] | | 8989 | 64 | | 8843 | 56 | | 8843 | 56 |
| Aluminiumphosphit | basisches AluminiumPhosphit Al(OH)(H₂PO₃)₂ *2H₂O | sekundäres AluminiumPhosphit Al₂(HPO₃)₃ | Al₂(HPO₃)₃* 4H₂O | sekundäres AluminiumPhosphit Al₂(HPO₃)₃ | Mischung von Al₂(HPO₃)₃* 4H₂O mit schwerlöslichen Aluminiumsalzen und stickstofffreien Fremdionen | Aluminiumhydrogenphosphite und Al-Salze | sekundäres AluminiumPhosphit Al₂(HPO₃)₃ | Alkali-Aluminium-Mischphosphite | Aluminiumhydrogenphosphite |
| dito, Menge [Gew.-%] | 1 | 1 | 99 | 10 | 10 | 90 | 20 | 20 | 50 |
| Kenngrößen nach Pfrengle | | | | | | | | | |
| Spanne des Verhältnisses Radius/Höhe (=cot alpha) | 0,48 | 0,35 | 0,53 | 0,45 | 0,35 | 0,53 | 0,48 | 0,32 | 0,53 |
| Spanne der Schüttkegelhöhe [mm] | 12 | 8 | 14 | 11 | 8 | 14 | 12 | 7 | 14 |

**Tabelle 8: Zusammensetzung flammgeschützter polymerer Formmassen und Flammschutztests von flammgeschützten polymeren Formkörpern nach UL 94**

| Beispiel | | 74 |
|---|---|---|
| | | |
| | | |
| | | |
| Polybutylenterephthalat | [Gew.-%] | 50 |
| | | |
| | | |
| Glasfasern PBT | [Gew.-%] | 30 |
| Flammschutzmittel nach Beispiel 31 | [Gew.-%] | 20 |
| UL 94 0,8mm | [-] | V-0 |

| | | |
|---|---|---|
| Polybutylenterephthalat: Celanex^{®} 2500, Fa. Ticona Glasfasern PBT: Vetrotex^{®} EC 10 983, Fa. Saint-Gobain | | |

### Beispiel 78

3 Mol Na₂HPO₃-Lösung und 2 Mol Al₂(SO₄)₃ -Lösung werden in wässriger Lösung bei 150 °C und pH = 6,1 während 3 h zur Kristallisation gebracht, abfiltriert und an der Luft getrocknet. Das Natriumaluminiumphosphit wird röntgenpulverdiffraktometrisch untersucht. Die Stöchiometrie ist Al_{2,0}Na_{0,6}(HPO₃)_{2,89}*0,28H₂O

### Beispiel 78:

Röntgenpulverdaten von Natriumaluminiumphosphit

| Winkel [°2Th] | Reflexhöhe [cts] |
|---|---|
| 9,7557 | 297,79 |
| 12,6394 | 253,3 |
| 16,3439 | 2427,07 |
| 16,6964 | 1030,74 |
| 17,3912 | 580,89 |
| 18,7844 | 603,35 |
| 19,3678 | 650,66 |
| 23,7489 | 875,42 |
| 26,5675 | 1631,28 |
| 26,9505 | 966,58 |
| 27,2826 | 1227,78 |
| 30,3357 | 943,17 |
| 30,8885 | 769,05 |
| 31,9389 | 660,8 |
| 33,1695 | 1875,34 |
| 33,7547 | 556,79 |
| 34,1478 | 956,04 |

### Beispiel 79

3 Mol Na₂HPO₃-Lösung und 2 Mol Al₂(SO₄)₃ -Lösung werden in wässriger Lösung bei 150 °C und pH = 3,5 während 3 h zur Kristallisation gebracht, abfiltriert und an der Luft getrocknet.

### Beispiel 80

3 Mol Na₂HPO₃-Lösung und 2 Mol Al₂(SO₄)₃-Lösung werden in wässriger Lösung bei 150 °C und pH = 3,5 während 3 h zur Kristallisation gebracht, abfiltriert und an der Luft getrocknet.

### Beispiel 81

3 Mol Na₂HPO₃-Lösung und 2,01 Mol Al₂(SO₄)₃-Lösung werden in wässriger Lösung bei 150 °C und pH = 2,5 während 3 h zur Kristallisation gebracht, abfiltriert und an der Luft getrocknet.

### Beispiel 82

3 Mol Na₂HPO₃-Lösung und 2,1 Mol Al₂(SO₄)₃-Lösung werden in wässriger Lösung bei 150 °C und pH = 1 während 6 h zur Kristallisation gebracht, abfiltriert und an der Luft getrocknet.

### Beispiel 82:

Röntgenpulverdaten von Al₂(HPO₃)₃*4H₂O

| Winkel [°2Th] | Höhe [cts] |
|---|---|
| 11,7777 | 345,54 |
| 13,6143 | 1270,15 |
| 14,7988 | 993,31 |
| 15,3862 | 494,47 |
| 16,2983 | 596,21 |
| 20,2051 | 1455,68 |
| 22,5312 | 1405,43 |
| 32,9021 | 1440,39 |

### Beispiele 78 bis 82:

Röntgenpulverdaten von Mischungen von Al₂(HPO₃)₃*4H₂O und Natriumaluminiumphosphit

| Beispiel | Höhe des Reflexes bei 9,7557°2Th [cts] | Natrium-AluminiumPhosphit-Gehalt [Gew.-%] | Natrium-Gehalt [Gew.-%] |
|---|---|---|---|
| 78 | 297,79 | 100,0 | 4,1 |
| 79 | 152,76 | 51,3 | 2,1 |
| 80 | 44,67 | 15,0 | 0,6 |
| 81 | 14,89 | 5,0 | 0,2 |
| 82 (Vgl.) | 0 | 0,0 | 0,0 |

## Patentansprüche

1. Halogenfreie Flammschutzmittelmischung, enthaltend 1 bis 99 Gew.-% einer Komponente A und 1 bis 99 Gew.-% einer Komponente B, wobei Komponente A 85 bis 99,995 Gew.-% eines festen Aluminiumdiethylphosphinsäuresalzes und 0,005 bis 15 Gew.-% nicht-brennbare Zusätze enthält wobei es sich bei den Zusätzen um Aluminiumphosphate, Aluminiumhydrogenphosphate, Calciumhydrogenphosphate, Calciumagnesiumphosphate, Calciumaluminiumphosphat, Calciumcarbonatphosphat, Calciumphosphate, Cerphosphate, Cerhydrogenphosphat, Lithiumphosphat, Lithiumhydrogenphosphat, Magnesiumphosphate, Magnesiumhydrogenphosphate, Kaliumphosphate, Kaliumaluminiumphosphat, Kaliumhydrogen-phosphate, Natriumhydrogenphosphate, Natriumhydratphosphate, Natriumaluminiumphosphate und/oder ihre Hydrate handelt; und es sich bei der Komponente B um Aluminiumphosphit handelt, wobei es sich bei den bei den Aluminiumphosphiten um solche der Formeln (I), (II) und/oder (III)
Al₂(HPO₃)₃ × (H₂O)_{q} (I)
in der
q 0 bis 4
bedeutet,
Al_{2,00}M_{z}(HPO₃)_{y}(OH)ᵥ × (H₂O)_{w} (II)
in der
M Alkalimetallionen
z 0,01 bis 1,5
y 2,63 bis 3,5
v 0 bis 2 und
w 0 bis 4
bedeutet,
Al_{2,00}(HPO₃)ᵤ(H₂PO₃)ₜ × (H₂O)ₛ (III)
in der
u 2 bis 2,99
t 2 bis 0,01 und
s 0 bis 4
bedeutet,
und/oder um Mischungen von Aluminiumphosphit der Formel (I) mit schwerlöslichen Aluminiumsalzen und stickstofffreien Fremdionen, um Mischungen von Aluminiumphosphit der Formel (III) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1, um Al₄H₆P₁₆O₁₈ und/oder um Mischungen von 0 - 99,9 Gew.-% Al₂(HPO₃)₃*nH₂O mit 0,1 - 100 Gew.-% Natriumaluminiumphosphit handelt, mit der Maßgabe, dass die Flammschutzmittelmischung keine Bindemittel enthält.

2. Halogenfreie Flammschutzmittelmischung nach Anspruch 1, enthaltend 92 bis 99,95 Gew.-% eines festen Aluminiumdiethylphosphinsäuresalzes und 0,05 bis 8 Gew.-% nicht-brennbare Zusätze.

3. Halogenfreie Flammschutzmittelmischung nach Anspruch 1 oder 2, enthaltend 20 bis 80 Gew. % der Komponente A und 20 bis 80 Gew.-% der Komponente B.

4. Halogenfreie Flammschutzmittelmischung nach einem oder mehreren der Ansprüche 1 bis 3, **dadurch gekennzeichnet, dass** es sich bei den nicht-brennbaren Zusätzen um Aluminiumphosphate, Aluminiumhydrogenphosphate oder um Natriumhydrogenphosphate handelt.

5. Halogenfreie Flammschutzmittelmischung nach einem oder mehreren der Ansprüche 1 bis 4, **dadurch gekennzeichnet, dass** es sich bei den Aluminiumphosphit um eine Mischung von 50 - 99 Gew.-% Al₂(HPO₃)₃ × (H₂O)_{q} in der q 0 bis 4 bedeutet und 1 - 50 Gew.-% Natriumaluminiumphosphit handelt.

6. Halogenfreie Flammschutzmittelmischung nach einem oder mehreren der Ansprüche 1 bis 4, **dadurch gekennzeichnet, dass** es sich bei den Aluminiumphosphit um eine Mischung von 50 - 99 Gew.-% Al₂(HPO₃)₃ × (H₂O)_{q} in der q 0 bis 4 bedeutet und 1 - 50 Gew.-% Al_{2,00}M_{z}(HPO₃)_{y}(OH)ᵥ × (H₂O)_{w} (II) in der M Natrium, z 0,005 bis 0,15, y 2,8 bis 3,1, v 0 bis 0,4 und w 0 bis 4 bedeutet, handelt.

7. Halogenfreie Flammschutzmittelmischung nach einem oder mehreren der Ansprüche 1 bis 6, **dadurch gekennzeichnet, dass** die Komponente A eine mittlere Teilchengröße d50 von 0,05 bis 10µm und die Komponente B eine mittlere Teilchengröße d50 von 0,05 bis 10µm sowie eine Restfeuchte von 0,05 bis 8 Gew.-% aufweist.

8. Verfahren zur Herstellung einer Flammschutzmittelmischung nach einem oder mehreren der Ansprüche 1 bis 7, **dadurch gekennzeichnet, dass** man die Komponenten A und B jeweils in Pulverform miteinander mischt und gegebenenfalls siebt.

9. Verwendung einer halogenfreien Flammschutzmittelmischung nach einem oder mehreren der Ansprüche 1 bis 7 als Zwischenprodukt für weitere Synthesen, als Synergist, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen, in oder als Flammschutzmittel, als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist in weiteren Flammschutzmittel-Mischungen.

10. Flammgeschützte thermoplastische oder duroplastische Polymerformmasse, Polymer-Formkörper, -Filme, -Fäden und/oder -Fasern, enthaltend 0,1 bis 45 Gew.% halogenfreie Flammschutzmittelmischung nach einem oder mehreren der Ansprüche 1 bis 7, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

11. Flammgeschützte thermoplastische oder duroplastische Polymerformmasse, Polymer-Formkörper, -Filme, -Fäden und/oder -Fasern, enthaltend 1 bis 30 Gew.-% halogenfreie Flammschutzmittelmischung nach einem oder mehreren der Ansprüche 1 bis 7, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew.-% beträgt.

12. Flammgeschützte thermoplastische oder duroplastische Polymerformmasse, Polymer-Formkörper, -Filme, -Fäden und/oder -Fasern, enthaltend eine halogenfreie Flammschutzmittelmischung nach einem oder mehreren der Ansprüche 1 bis 7, **dadurch gekennzeichnet, dass** es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

13. Flammgeschützte thermoplastische oder duroplastische Polymerformmasse, Polymer-Formkörper, -Filme, -Fäden und/oder -Fasern nach einem oder mehreren der Ansprüche 10 bis 12, **dadurch gekennzeichnet, dass** es sich bei dem Polymer um Polyamid 4/6 (Poly(tetramethylen-adipamid), Poly-(tetramethylen-adipinsäurediamid), um Polyamid 6 (Polycaprolactam, Poly-6-aminohexansäure), um Polyamid 6/6 ((Poly(N,N'-hexamethyleneadipinediamid) und/oder um HTN (Hochtemperatur-Nylon).

## Claims

1. Halogen-free flame retardant mixture comprising 1% to 99% by weight of a component A and 1% to 99% by weight of a component B, wherein component A comprises 85% to 99.995% by weight of a solid aluminum diethylphosphinate and 0.005% to 15% by weight of noncombustible additions, wherein the additions are aluminum phosphates, aluminum hydrogenphosphates, calcium hydrogenphosphates, calcium magnesium phosphates, calcium aluminum phosphate, calcium carbonate phosphate, calcium phosphates, cerium phosphates, cerium hydrogenphosphate, lithium phosphate, lithium hydrogenphosphate, magnesium phosphates, magnesium hydrogenphosphates, potassium phosphates, potassium aluminum phosphate, potassium hydrogenphosphates, sodium hydrogenphosphates, sodium hydrate phosphates, sodium aluminum phosphates and/or hydrates thereof;
and component B is aluminum phosphite, wherein the aluminum phosphites are those of the formulae (I), (II) and/or (III)
Al₂(HPO₃)₃ × (H₂O)_{q} (I)
in which
q is 0 to 4,
Al_{2.00}M_{z}(HPO₃)_{y}(OH)ᵥ × (H₂O)_{w} (II)
in which
M is alkali metal ions,
z is 0.01 to 1.5,
y is 2.63 to 3.5,
v is 0 to 2 and
w is 0 to 4,
Al_{2.00}(HPO₃)ᵤ(H₂PO₃)ₜ × (H₂O)ₛ (III)
in which
u is 2 to 2.99,
t is 2 to 0.01 and
s is 0 to 4,
and/or are mixtures of aluminum phosphite of the formula (I) with sparingly soluble aluminum salts and nitrogen-free foreign ions, mixtures of aluminum phosphite of the formula (III) with aluminum salts, aluminum phosphite [Al(H₂PO₃)₃], secondary aluminum phosphite [Al₂(HPO₃)₃], basic aluminum phosphite [Al(OH)(H₂PO₃)₂*2aq], aluminum phosphite tetrahydrate [Al₂(HPO₃)₃*4aq], aluminum phosphonate, Al₇(HPO₃)₉(OH)₆(1,6-hexanediamine)_{1.5}*12H₂O, Al₂(HPO₃)³*xAlO₃*nH₂O with x = 2.27 - 1, Al₄H₆P₁₆O₁₈ and/or mixtures of 0%-99.9% by weight of Al₂(HPO₃)₃*nH₂O with 0.1%-100% by weight of sodium aluminum phosphite, with the proviso that the flame retardant does not contain any binder.

2. Halogen-free flame retardant mixture according to Claim 1, comprising 92% to 99.95% by weight of a solid aluminum diethylphosphinate and 0.05% to 8% by weight of noncombustible additions.

3. Halogen-free flame retardant mixture according to Claim 1 or 2, comprising 20% to 80% by weight of component A and 20% to 80% by weight of component B.

4. Halogen-free flame retardant mixture according to one or more of Claims 1 to 3, **characterized in that** the noncombustible additions are aluminum phosphates, aluminum hydrogenphosphates or sodium hydrogenphosphates.

5. Halogen-free flame retardant mixture according to one or more of Claims 1 to 4, **characterized in that** the aluminum phosphite is a mixture of 50%-99% by weight of Al₂(HPO₃)₃ x (H₂O)_{q} in which q is 0 to 4 and 1%-50% by weight of sodium aluminum phosphite.

6. Halogen-free flame retardant mixture according to one or more of Claims 1 to 4, **characterized in that** the aluminum phosphite is a mixture of 50%-99% by weight of Al₂(HPO₃)₃ × (H₂O)_{q} in which q is 0 to 4 and 1%-50% by weight of Al_{2.00}M_{z}(HPO₃)_{y}(OH)ᵥ × (H₂O)_{w} (II) in which M is sodium, z is 0.005 to 0.15, y is 2.8 to 3.1, v is 0 to 0.4 and w is 0 to 4.

7. Halogen-free flame retardant mixture according to one or more of Claims 1 to 6, wherein component A has a median particle size d50 of 0.05 to 10 µm and component B a median particle size d50 of 0.05 to 10 µm and a residual moisture content of 0.05% to 8% by weight.

8. Process for producing a flame retardant mixture according to one or more of Claims 1 to 7, **characterized in that** components A and B are mixed with one another, each in powder form, and optionally sieved.

9. Use of a halogen-free flame retardant mixture according to one or more of Claims 1 to 7 as an intermediate for further syntheses, as a synergist, as a binder, as a crosslinker or accelerator in the curing of epoxy resins, polyurethanes and unsaturated polyester resins, as polymer stabilizers, as crop protection agents, as a sequestrant, as a mineral oil additive, as an anticorrosive, in washing and cleaning composition applications and in electronics applications, in or as flame retardants, as flame retardants for clearcoats and intumescent coatings, in or as flame retardants for wood and other cellulosic products, in or as reactive and/or nonreactive flame retardants for polymers, for production of flame-retardant polymer molding compositions, for production of flame-retardant polymer moldings, and/or for rendering pure and blended polyester and cellulose fabrics flame-retardant by impregnation and/or as a synergist in further flame retardant mixtures.

10. Flame-retardant thermoplastic or thermoset polymer molding composition or polymer molding, film, filament and/or fiber comprising 0.1% to 45% by weight of halogen-free flame retardant mixture according to one or more of Claims 1 to 7, 55% to 99.9% by weight of thermoplastic or thermoset polymer or mixtures thereof, 0% to 55% by weight of additives and 0% to 55% by weight of filler or reinforcing materials, where the sum total of the components is 100% by weight.

11. Flame-retardant thermoplastic or thermoset polymer molding composition or polymer molding, film, filament and/or fiber comprising 1% to 30% by weight of halogen-free flame retardant mixture according to one or more of Claims 1 to 7, 10% to 97% by weight of thermoplastic or thermoset polymer or mixtures thereof, 1% to 30% by weight of additives and 1% to 30% by weight of filler or reinforcing materials, where the sum total of the components is 100% by weight.

12. Flame-retardant thermoplastic or thermoset polymer molding composition or polymer molding, film, filament and/or fiber comprising a halogen-free flame retardant mixture according to one or more of Claims 1 to 7, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the unsaturated polyester or epoxy resin type.

13. Flame-retardant thermoplastic or thermoset polymer molding composition or polymer molding, film, filament and/or fiber according to one or more of Claims 10 to 12, **characterized in that** the polymer is nylon-4,6 (poly(tetramethyleneadipamide)), nylon-6 (polycaprolactam, poly-6-aminohexanoic acid), nylon-6,6 ((poly(N,N'-hexamethyleneadipamide) and/or HTN (high-temperature nylon).

## Revendications

1. Mélange d'agents ignifuges sans halogène, contenant 1 à 99 % en poids d'un composant A et 1 à 99 % en poids d'un composant B, le composant A contenant 85 à 99,995 % en poids d'un diéthylphosphinate d'aluminium solide et 0,005 à 15 % en poids d'additifs non combustibles, les additifs consistant en phosphates d'aluminium, hydrogénophosphates d'aluminium, hydrogénophosphates de calcium, phosphates de calcium et de magnésium, phosphate de calcium et d'aluminium, phosphate de calcium carbonaté, phosphates de calcium, phosphates de cérium, hydrogénophosphate de cérium, phosphate de lithium, hydrogénophosphate de lithium, phosphates de magnésium, hydrogénophosphates de magnésium, phosphates de potassium, phosphate de potassium et d'aluminium, hydrogénophosphates de potassium, hydrogénophosphates de sodium, phosphates de sodium hydratés, phosphates de sodium et d'aluminium et/ou leurs hydrates ; et pour ce qui est du composant B il s'agit de phosphite d'aluminium, les phosphites d'aluminium consistant en ceux de formules (I), (II) et/ou (III)
Al₂(HPO₃)₃ × (H₂O)_{q} (I)
dans laquelle
q vaut de 0 à 4,
Al_{2,00}M_{z}(HPO₃)_{y}(OH)ᵥ × (H₂O)_{w} (II)
dans laquelle
M représente des ions de métaux alcalins
z vaut de 0,01 à 1,5
y vaut de 2,63 à 3,5
v vaut de 0 à 2 et
w vaut de 0 à 4,
Al_{2,00}(HPO₃)ᵤ(H₂PO₃)ₜ × (H₂O)ₛ (III)
dans laquelle
u vaut de 2 à 2,99
t vaut de 2 à 0,01 et
s vaut de 0 à 4,
et/ou de mélanges de phosphite d'aluminium de formule (I) avec des sels d'aluminium difficilement solubles et des ions étrangers sans azote, de mélanges de phosphite d'aluminium de formule (III) avec des sels d'aluminium, de phosphite d'aluminium [Al(H₂PO₃)₃], de phosphite d'aluminium secondaire [Al₂(HPO₃)₃], de phosphite d'aluminium basique [Al(OH) (H₂PO₃)₂*2aq], de phosphite d'aluminium tétrahydraté [Al₂(HPO₃)₃*4Aq], de phosphonate d'aluminium, de Al₇(HPO₃)₉(OH)₆(1,6-hexane-diamine)_{1,5}*12H₂O, de Al₂(HPO₃)₃*xAl₂O₃*nH₂O où x = 2,27 - 1, de Al₄H₆P₁₆O₁₈ et/ou de mélanges de 0 - 99,9 % en poids de Al₂(HPO₃)₃*nH₂O avec 0,1 - 100 % en poids de phosphite d'aluminium et de sodium, étant entendu que le mélange d'agents ignifuges ne contient pas de liant.

2. Mélange d'agents ignifuges sans halogène selon la revendication 1, contenant 92 à 99,95 % en poids d'un diéthylphosphinate d'aluminium solide et 0,05 à 8 % en poids d'additifs non combustibles.

3. Mélange d'agents ignifuges sans halogène selon la revendication 1 ou 2, contenant 20 à 80 % en poids du composant A et 20 à 80 % en poids du composant B.

4. Mélange d'agents ignifuges sans halogène selon une ou plusieurs des revendications 1 à 3, **caractérisé en ce que** pour ce qui est des additifs non combustibles il s'agit de phosphates d'aluminium, d'hydrogénophosphates d'aluminium ou d'hydrogénophosphates de sodium.

5. Mélange d'agents ignifuges sans halogène selon une ou plusieurs des revendications 1 à 4, **caractérisé en ce que** pour ce qui est du phosphite d'aluminium, il s'agit d'un mélange de 50 - 99 % en poids de Al₂(HPO₃)₃ × (H₂O)_{q} où q vaut de 0 à 4 et 1 - 50 % en poids de phosphite d'aluminium et de sodium.

6. Mélange d'agents ignifuges sans halogène selon une ou plusieurs des revendications 1 à 4, **caractérisé en ce que** pour ce qui est du phosphite d'aluminium, il s'agit d'un mélange de 50 - 99 % en poids de Al₂(HPO₃)₃ × (H₂O)_{q} où q vaut de 0 à 4 et 1 - 50 % en poids de Al_{2,00}M_{z}(HPO₃)_{y}(OH)ᵥ × (H₂O)_{w} (II) où M représente le sodium, z vaut de 0,005 à 0,15, y vaut de 2,8 à 3,1, v vaut de 0 à 0,4 et w vaut de 0 à 4.

7. Mélange d'agents ignifuges sans halogène selon une ou plusieurs des revendications 1 à 6, **caractérisé en ce que** le composant A présente une taille moyenne de particule d50 de 0,05 à 10 µm et le composant B présente une taille moyenne de particule d50 de 0,05 à 10 µm ainsi qu'une humidité résiduelle de 0,05 à 8 % en poids.

8. Procédé pour la préparation d'un mélange d'agents ignifuges selon une ou plusieurs des revendications 1 à 7, **caractérisé en ce qu'**on mélange l'un avec l'autre les composants A et B chacun sous forme de poudre et éventuellement on tamise.

9. Utilisation d'un mélange d'agents ignifuges sans halogène selon une ou plusieurs des revendications 1 à 7, en tant que produit intermédiaire pour des synthèses ultérieures, en tant qu'agent synergique, en tant que liant, en tant qu'agent de réticulation ou accélérateur lors du durcissement de résines époxy, polyuréthanes, résines polyester insaturées, en tant que stabilisants de polymères, en tant qu'agent phytosanitaire, en tant que séquestrant, en tant qu'additif pour huiles minérales, en tant qu'agent anticorrosion, dans des applications de produits de lavage et de nettoyage, dans des applications électroniques, dans des ou en tant qu'agents ignifuges, en tant qu'agent ignifuge pour des vernis et des revêtements intumescents, dans des ou en tant qu'agents ignifuges pour bois et autres produits contenant de la cellulose, dans des ou en tant qu'agents ignifuges réactifs et/ou non réactifs pour polymères, dans la production de matières à mouler polymères ignifugées, dans la production de corps moulés polymères ignifugés et/ou dans le traitement retardateur de flamme par imprégnation de tissus purs et mélangés de polyester et cellulose et/ou en tant qu'agent synergique dans d'autres mélanges d'agents ignifuges.

10. Matière à mouler polymère, corps moulés, films, fils et/ou fibres polymères, thermoplastiques ou thermodurcissables, ignifugés, contenant 0,1 à 45 % en poids de mélange d'agents ignifuges sans halogène selon une ou plusieurs des revendications 1 à 7, 55 à 99,9 % en poids de polymère thermoplastique ou thermodurcissable ou de mélanges de tels polymères, 0 à 55 % en poids d'additifs et 0 à 55 % en poids de charge ou de matériaux de renforcement, la somme des composants étant égale à 100 % en poids.

11. Matière à mouler polymère, corps moulés, films, fils et/ou fibres polymères, thermoplastiques ou thermodurcissables, ignifugés, contenant 1 à 30 % en poids de mélange d'agents ignifuges sans halogène selon une ou plusieurs des revendications 1 à 7, 10 à 97 % en poids de polymère thermoplastique ou thermodurcissable ou de mélanges de tels polymères, 1 à 30 % en poids d'additifs et 1 à 30 % en poids de charge ou de matériaux de renforcement, la somme des composants étant égale à 100 % en poids.

12. Matière à mouler polymère, corps moulés, films, fils et/ou fibres polymères, thermoplastiques ou thermodurcissables, ignifugés, contenant un mélange d'agents ignifuges sans halogène selon une ou plusieurs des revendications 1 à 7, **caractérisés en ce que** pour ce qui est du polymère il s'agit de polymères thermoplastiques du type polystyrène-HI (High-Impact), de polyphénylène-éthers, polyamides, polyesters, polycarbonates et alliages ou d'alliages de polymères du type ABS (acrylonitrile-butadiène-styrène) ou PC/ABS (polycarbonate/acrylonitrile-butadiène-styrène) ou de matières plastiques PPE/HIPS (polyphénylèneéther/polystyrène-HI) et/ou de polymères thermoplastiques du type des polyesters insaturés ou résines époxy.

13. Matière à mouler polymère, corps moulés, films, fils et/ou fibres polymères, thermoplastiques ou thermodurcissables, ignifugés, selon une ou plusieurs des revendications 10 à 12, **caractérisés en ce que** pour ce qui est du polymère il s'agit de polyamide 4/6 (poly(tétraméthylène-adipamide), poly(tétraméthylènediamide d'acide adipique)), de polyamide 6 (polycaprolactame, poly(acide 6-aminohexanoïque)), de polyamide 6/6 (poly(N,N'-hexaméthylène-adipinediamide)) et/ou de HTN (Nylon haute température).
